# EUROPEAN PATENT SPECIFICATION

(11) **EP 2 070 766 B1**
(45) Date of publication and mention of the grant of the patent: **09.02.2011**
(21) Application number: 08171144.2
(22) Date of filing: 09.12.2008
(51) Int. Cl.: B60R 5/04

(54) **Parcel shelf assembly for a vehicle, in particular, a motor vehicle and parcel shelf for said assembly**
Heckablagenanordnung für ein Fahrzeug, insbesondere für ein Kraftfahrzeug und Heckablage für eine solche Anordnung
Ensemble de plage arrière d'un véhicule, en particulier un véhicule à moteur et plage arrière pour cet ensemble

(30) Priority: 10.12.2007 IT TO20070891
(43) Date of publication of application: 17.06.2009
(73) Proprietor: Fibro S.p.A., 10040 Cumiana (IT)
(72) Inventor: Signoretto, Carlo Teresio, 10129 Torino (IT)
(74) Representative: Jorio, Paolo

(56) References cited:
- EP-A- 1 356 993

## Description

The present invention relates to a parcel shelf assembly for vehicles, in general, and motor vehicles in particular.

As is known, the boot area of a vehicle is, generally, covered by a rigid parcel shelf, which comprises a longitudinal extremity, normally the front extremity in the direction of travel of the vehicle, hinged to fixed supporting members so as to rotate about a fixed hinge axis and the opposite extremity that is attached, generally by means of flexible tie means, to the hatchback door for closing the boot area. In this way, when the hatchback door is opened the parcel shelf rotates about its fixed hinge axis between a closed position in which it covers the top of the boot area, and an open position in which said boot area can be accessed conveniently.

The top of the boot area is only completely or totally covered when the rear seat or seats of the vehicle are arranged in their nominal or reference position, and is only partially covered when the rear seat or seats is/are moved forward towards the front seats and/or the back of said rear seats is turned to alter the inclination of said seat back.

In order to cover the boot area even when the rear seat or seats is/are arranged in positions other than the nominal or reference position the use is known of additional pull-out fabric devices with return or rewind springs, the coupling members of which are, generally, arranged on the outer or inner surface of the parcel shelf and are fastened to said parcel shelf in a visible manner by means of screws or other equivalent mechanical fastening means.

Though used, such additional devices are arranged in a cantilevered fashion with respect to the parcel shelf and are consequently generally exposed to impact damage and naturally come into contact with dust both during loading/unloading operations, and when articles of clothing or other items are placed on top of said parcel shelf, inevitably losing their original efficiency and functionality within a relatively short time.

Such a device is known from EP1356993.

In addition to the inconvenience described above, the fact that the additional device is fastened to the outer lateral surfaces of the parcel shelf is not aesthetically satisfactory, in that the additional covering devices are always visible even when arranged on the surface of the parcel shelf facing towards the inside of the boot area. Attempts to hide such additional devices using components that are separate from the parcel shelf and attached to said parcel shelf after mounting the additional device by means of screws, rivets or quick or pull-off coupling means have proved unsatisfactory both functionally and in terms of the relative costs of production and assembly.

On some vehicles, other fabric devices of the type provided with a rewinder are arranged between the back of the rear seats and the parcel shelf or between the parcel shelf and the hatchback door and/or side windows. In some cases these merely act as a division and in others they act as a sun-shade. Such fabric devices are normally separate from the parcel shelf and are generally attached by means of dedicated structures to different parts of the vehicle.

The object of the present invention is to provide a parcel shelf assembly, which overcomes the drawbacks described above in a simple and inexpensive manner.

According to the present invention there is provided a parcel shelf assembly for a vehicle, in particular, a motor vehicle, the assembly comprising a parcel shelf, and at least one pull-out fabric device attached to said parcel shelf; the parcel shelf comprising a rigid portion and means for coupling said rigid portion to a fastening element, characterized in that said parcel shelf also comprises at least one covering portion and at least one weakened portion arranged between said rigid portion and said covering portion to allow the covering portion to be placed in an operating position, in which the covering portion extends at least partially in a position facing said rigid portion and to cover said pull-out fabric device.

Preferably, in the assembly described above, said intermediate portion defines a virtual hinge suitable to allow the covering portion to rotate with respect to said rigid portion from and towards said covering position about a hinge axis.

The present invention also relates to a parcel shelf for vehicles, in particular, motor vehicles.

According to the present invention there is provided a parcel shelf for vehicles, in particular, motor vehicles, the parcel shelf comprising a rigid portion, and means for coupling said rigid portion to a fastening element, and being characterized in that it also comprises at least one perimeter flag-like covering portion and at least one weakened portion arranged between said rigid portion and said perimeter flag-like covering portion to allow the perimeter flag-like covering portion to be arranged in a position facing said rigid portion; when arranged in the position facing said rigid portion, the perimeter flag-like covering portion delimiting with the rigid portion at least one housing chamber.

The present invention will now be described with reference to the attached drawings, illustrating a nonlimiting embodiment thereof, in which:
figure 1 is a perspective view of a preferred embodiment of the parcel shelf assembly according to the present invention;
figure 2 is a perspective view of a different arrangement of a detail of figure 1;
figure 3 is a cross-sectional view, on a greatly enlarged scale and with some parts removed for the sake of clarity, along the line III-III of figure 1; and
figure 4 is a perspective view of a further detail of figure 1.

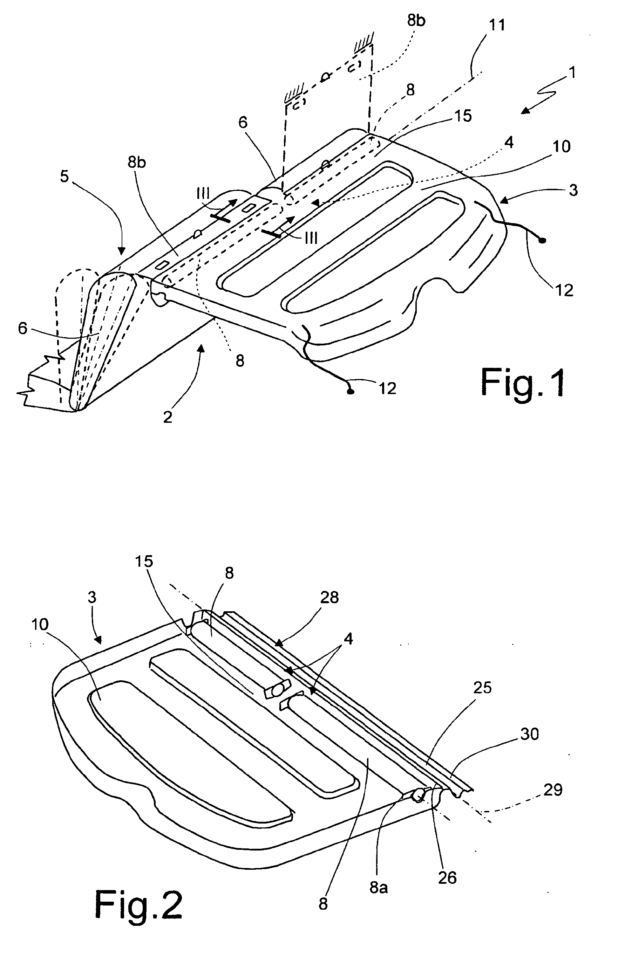

In figure 1, designated as a whole by number 1 is a parcel shelf assembly for covering a boot area 2 of a vehicle, in general, and of a motor vehicle, in particular.

In the particular example described and illustrated in figure 1, the assembly 1 comprises a parcel shelf 3 and a pull-out fabric assembly 4 with rewinder, of a known type that is not described in detail, which is arranged in a position adjacent to a rear seat 5 of the vehicle to cover the top of the boot area 2 regardless of the longitudinal position of the rear seat 5 and regardless of the inclination of the back 6 of said rear seat 5.

In the particular example being described, the rear seat 5 is of the type that can be split and the assembly 4 comprises two mutually independent pull-out fabric devices 8 with rewinders that are aligned with one another and each of which is attached to a relative part of the rear seat 5, as illustrated in figure 1.

Again with reference to figure 1 and, in particular, to figure 2, the parcel shelf 3 is made as a one-piece construction and comprises a rigid portion 10, which is hinged anteriorly, in a known way, to a pair of fixed supporting members of a known type that are not illustrated, so as to rotate about a fixed hinge axis 11 upon opening the hatchback door, to which it is attached by means of flexible tie means 12.

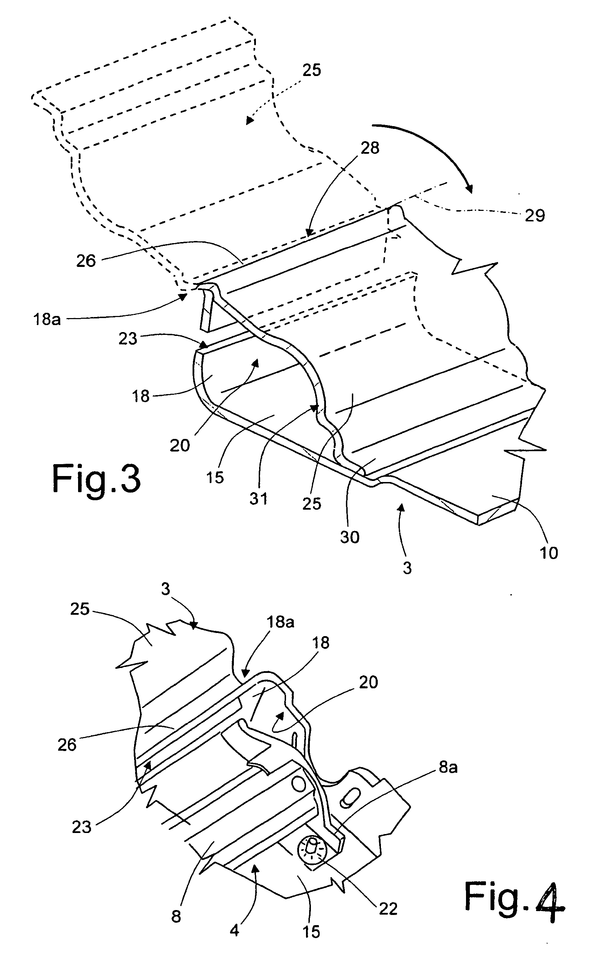

The rigid portion 10 terminates anteriorly with a wall 15 comprising a substantially flat and horizontal plate, from a perimeter edge 16 of which a flap or front wall 18 extends integrally with said wall 15 and towards the inside of the boot 2 (figures 3 and 4). The flap 18 and the wall 15 delimit a recess 20, adjacent to the upper extremity of the seat back 6 and open towards the inside of the boot 2. In the recess 20 there are housed the two devices 8, of which the frames 8a are permanently attached to the wall 15 by means of fastening elements 22, for example screws or quick coupling devices, as illustrated in figure 4, and of which the fabric covers 8b pass through respective slits 23 obtained through the flap 18 parallel to the axis 11.

According to that illustrated in figures 2 and 4, the parcel shelf 3 also comprises a shaped covering portion 25 elongated in a direction parallel to the axis 11, and a weakened intermediate portion 26 connecting said portions 10 and 25 to one another. In particular, the weakened portion 26 is less thick than the portions 10 and 25 and connects the covering portion 25 to a free perimeter edge 18a of the flap 18 defining a virtual hinge 28 suitable to allow the covering portion 25 to rotate about a fixed hinge axis 29 parallel to the axis 11 between an assembly position, illustrated in figure 2 and with the dashed line in figure 3, in which the covering portion 25 extends in a flag-like manner from the rigid portion 10, and a closed position, illustrated in figure 4, in which a free end section 30 of the covering portion 25 is permanently attached to the rigid portion 10, and said covering portion 25 extends in a position facing the wall 15 and the flap 18 so as to cover the area 20 and isolate the devices 8 in a housing chamber 31 (figure 3) communicating with the outside through the slits 23.

The parcel shelf assembly 1 is produced as follows. Firstly, the parcel shelf 3 is moulded and the rigid portion 10, the covering portion 25 and the weakened portion are produced simultaneously and as a one-piece construction. After moulding, the covering portion 25 extends in a flag-like manner from the rigid portion 10 to allow the devices 8 to be inserted into the area 20, to allow these to be fastened therein using the elements 22 and to allow the insertion of the fabric covers 8b through the relative slits 23. Once attached, the covering portion 25 is rotated about the axis 29 and arranged so as to close the area 20 and cover the devices 8, after which said covering portion 25 is fixed permanently to the rigid portion 10, conveniently by means of glueing.

From the above description it is apparent that, while allowing the boot area 2 to be covered regardless of the position of the rear seats 5, the characteristics of the assembly 1 described and, in particular, the arrangement of the pull-out fabric devices 8 inside closed chambers mean said devices 8 can be protected against impact damage and dust so as to remain fully efficient and functionally reliable.

Moreover, in the assembly 1 described above, the pull-out fabric devices 8 are invisible both from the outside and from the inside of the boot area 2 giving the parcel shelf 1 a pleasing appearance.

The parcel shelf assembly 1 that is described is extremely compact and stable, even when subject to forcible stress, while the costs of production and assembly are particularly low. The reason for this is essentially because the pull-out fabric devices 8 are covered and/or concealed using a portion of said parcel shelf that is able to rotate with respect to the fastening portion of the pull-out fabric devices 8 by means of a weakened portion that is part of said parcel shelf.

From the above it is apparent that modifications and variations may be made to the parcel shelf assembly 1 described herein without departing from the scope of the claims.

In particular, the different parts of the parcel shelf 3 including the covering portion 25 could have different geometries and/or dimensions from those described by way of example. Specifically, the parcel shelf 3 could be shaped so as to define a different number of housing chambers 31 from that illustrated and/or housing chambers arranged in different positions from those that are described. For example, the housing chambers and, thus, the respective pull-out fabric devices, could be obtained in a position adjacent to the hatchback door so that the fabric devices cover the space between the parcel shelf and the hatchback door following the removal and/or adjustment of the rear seat or seats.

Moreover, the housing chamber or chambers could be dimensioned to house different pull-out fabric devices from the ones that are described and, in particular, pull-out fabric devices, in which the fabric covers 8b have different functions and, for example, act as sun-shades or dividing elements, as shown, for example, in figure 1 by the dashed line.

## Claims

1. Parcel shelf assembly (1) for a vehicle, in particular a motor vehicle, the assembly (1) comprising a parcel shelf (3) and at least one pull-out fabric device (8) attached to said parcel shelf (3); the parcel shelf (3) comprising a rigid portion (10) and means for connecting said rigid portion (10) to a fastening element, **characterized in that** said parcel shelf (3) also comprises at least one covering portion (25) and at least one weakened portion (26) arranged between said rigid portion (10) and said covering portion (25) to allow the covering portion (25) to be placed in an operating position, in which the covering portion (25) extends at least partially in a position facing said rigid portion (10) and to cover said pull-out fabric device (8)

2. Assembly according to claim 1, **characterized in that** said weakened portion (26) defines a virtual hinge (28) suitable to allow the covering portion (25) to rotate with respect to said rigid portion (10) from and towards said covering portion about a hinge axis (29).

3. Assembly according to claim 2, **characterized in that** said hinge axis (29) is a fixed hinge axis.

4. Assembly according to claim 2 or 3, **characterized in that** said hinge axis (29) extends along a section of an external perimeter edge of said rigid portion (10).

5. Assembly according to any one of the previous claims, **characterized in that** said rigid portion (10) said covering portion (25) and said weakened portion (26) are part of a one-piece construction.

6. Assembly according to any one of the previous claims, **characterized in that**, when arranged in the covering position, said covering portion (25) extends from the side of the rigid portion facing, in use, the inside of a relative boot area of the vehicle.

7. Assembly according to any one of the previous claims, **characterized in that** said rigid portion (10) and said covering portion (25) mutually delimit a housing chamber (31) for said pull-out fabric device (8); said chamber communicating with the outside through a slit (23) obtained through said rigid portion (10) through which said pull-out fabric (8b) passes.

8. Assembly according to any one of the previous claims, **characterized in that** it comprises at least one additional pull-out fabric device (8) carried by said parcel shelf (3); said additional flexible fabric device (8) being covered by a relative said covering portions (25).

9. Assembly according to claim 8, **characterized in that** said pull-out fabric devices (8) are arranged side by side and housed in a common chamber delimited by said rigid portion (10) and by said covering portion (25)

10. Parcel shelf (3) for vehicles, in particular, motor vehicles, the parcel shelf (3) comprising a rigid portion (10), and means for coupling said rigid portion to a fastening element, and being **characterized in that** it also comprises at least one perimeter flag-like covering portion and at least one weakened portion (26) arranged between said rigid portion (10) and said perimeter flag-like covering portion to allow the perimeter flag-like covering portion to be arranged in a position facing said rigid portion (10) ; when arranged in the position facing said rigid portion (10), the perimeter flag-like covering portion delimiting with the rigid portion (10) at least one housing chamber (31).

11. Parcel shelf according to claim 10, **characterized in that** said weakened portion (26) defines a virtual hinge (28) suitable to allow the perimeter flag-like covering portion to rotate with respect to said rigid portion (10) about a hinge axis (29)

12. Parcel shelf according to claim 10 or 11, **characterized in that** said rigid portion (10), said perimeter flag-like covering portion and said weakened portion (26) are made as a one-piece construction.

## Patentansprüche

1. Heckablagenanordnung (1) für ein Fahrzeug, insbesondere ein Kraftfahrzeug, wobei die Anordnung (1) eine Heckablage (3) und mindestens eine an der Heckablage (3) angebrachte Gewebematerial-Ausziehvorrichtung (8) aufweist; wobei die Heckablage (3) einen starren Bereich (10) und eine Einrichtung zum Verbinden des starren Bereichs (10) mit einem Befestigungselement aufweist,
**dadurch gekennzeichnet,**
**daß** die Heckablage (3) ferner mindestens einen Abdeckbereich (25) und mindestens einen Schwächungsbereich (26) aufweist, der zwischen dem starren Bereich (10) und dem Abdeckbereich (25) angeordnet ist, um ein Anordnen des Abdeckbereichs (25) in einer Betriebsposition zu ermöglichen, in der sich der Abdeckbereich (25) zumindest partiell in eine dem starren Bereich (10) zugewandt gegenüberliegende Position erstreckt und die Gewebematerial-Ausziehvorrichtung (8) überdeckt.

2. Anordnung nach Anspruch 1,
**dadurch gekennzeichnet,**
**daß** der Schwächungsbereich (26) ein virtuelles Gelenk (28) bildet, das dazu geeignet ist, dem Abdeckbereich (25) eine Rotationsbewegung in bezug auf den starren Bereich (10) von dem Abdeckbereich weg sowie zu dem Abdeckbereich hin um eine Gelenkachse (29) zu ermöglichen.

3. Anordnung nach Anspruch 2,
**dadurch gekennzeichnet,**
**daß** es sich bei der Gelenkachse (29) um eine feste Gelenkachse handelt.

4. Anordnung nach Anspruch 2 oder 3,
**dadurch gekennzeichnet,**
**daß** sich die Gelenkachse (29) entlang eines Bereichs eines äußeren Umfangsrands des starren Bereichs (10) erstreckt.

5. Anordnung nach einem der vorhergehenden Ansprüche,
**dadurch gekennzeichnet,**
**daß** der starre Bereich (10), der Abdeckbereich (25) und der Schwächungsbereich (26) Bestandteile einer einstückigen Konstruktion sind.

6. Anordnung nach einem der vorhergehenden Ansprüche,
**dadurch gekennzeichnet,**
**daß**, bei Anordnung in der Abdeckposition, der Abdeckbereich (25) sich von der Seite des starren Bereichs weg erstreckt, die im Gebrauch dem Inneren eines zugehörigen Kofferraumbereichs des Fahrzeugs zugewandt ist.

7. Anordnung nach einem der vorhergehenden Ansprüche,
**dadurch gekennzeichnet,**
**daß** der starre Bereich (10) und der Abdeckbereich (25) miteinander eine Gehäusekammer (31) für die Gewebematerial-Ausziehvorrichtung (8) begrenzen;
und **daß** die Kammer mit der Außenseite durch einen Schlitz (23) in Verbindung steht, der durch den starren Bereich (10) gebildet ist, den das Auszieh-Gewebematerial (8b) durchläuft.

8. Anordnung nach einem der vorhergehenden Ansprüche,
**dadurch gekennzeichnet,**
**daß** sie zumindest eine zusätzliche Gewebematerial-Ausziehvorrichtung (8) aufweist, die von der Heckablage (3) getragen ist;
und **daß** die zusätzliche flexible Gewebevorrichtung (8) von einem zugehörigen Abdeckbereich (25) bedeckt ist.

9. Anordnung nach Anspruch 8,
**dadurch gekennzeichnet,**
**daß** die Gewebematerial-Ausziehvorrichtungen (8) nebeneinander angeordnet sind und in einer gemeinsamen Kammer untergebracht sind, die von dem starren Bereich (10) und dem Abdeckbereich (25) abgegrenzt ist.

10. Heckablage (3) für Fahrzeuge, insbesondere Kraftfahrzeuge, wobei die Heckablage (3) einen starren Bereich (10) und eine Einrichtung zum Verbinden des starren Bereichs mit einem Befestigungselement aufweist, **dadurch gekennzeichnet,**
**daß** sie ferner mindestens einen am Rand befindlichen, laschenartigen Abdeckbereich und mindestens einen Schwächungsbereich (26) aufweist, der zwischen dem starren Bereich (10) und dem am Rand befindlichen, laschenartigen Abdeckbereich angeordnet ist, um es zu ermöglichen, den am Rand befindlichen, laschenartigen Abdeckbereich in einer dem starren Bereich (10) zugewandten Position anzuordnen; wobei der am Rand befindliche, laschenartige Abdeckbereich bei seiner Anordnung in der dem starren Bereich zugewandten Position zusammen mit dem starren Bereich (10) mindestens eine Gehäusekammer (31) begrenzt.

11. Heckablage nach Anspruch 10,
**dadurch gekennzeichnet,**
**daß** der Schwächungsbereich (26) ein virtuelles Gelenk (28) bildet, das dazu geeignet ist, dem am Rand befindlichen, laschenartigen Abdeckbereich eine Rotationsbewegung in bezug auf den starren Bereich (10) um eine Gelenkachse (29) zu ermöglichen.

12. Heckablage nach Anspruch 10 oder 11,
**dadurch gekennzeichnet,**
**daß** der starre Bereich (10), der am Rand befindliche, laschenartige Abdeckbereich und der Schwächungsbereich (26) als einstückige Konstruktion ausgebildet sind.

## Revendications

1. Ensemble de plage arrière (1) pour un véhicule, en particulier un véhicule à moteur, l'ensemble (1) comprenant une plage arrière (3) et au moins un dispositif en tissu rétractable (8) fixé sur ladite plage arrière (3) ; la plage arrière (3) comprenant une partie rigide (10) et des moyens pour raccorder ladite partie rigide (10) à un élément de fixation, **caractérisé en ce que** ladite plage arrière (3) comprend également au moins une partie de recouvrement (25) et au moins une partie affaiblie (26) agencée entre ladite partie rigide (10) et ladite partie de recouvrement (25) pour permettre à la partie de recouvrement (25) d'être placée dans une position de fonctionnement, dans laquelle la partie de recouvrement (25) s'étend au moins partiellement dans une position faisant face à ladite partie rigide (10) et pour recouvrir ledit dispositif en tissu rétractable (8).

2. Ensemble selon la revendication 1, **caractérisé en ce que** ladite partie affaiblie (26) définit une articulation virtuelle (28) appropriée pour permettre à la partie de recouvrement (25) de tourner par rapport à ladite partie rigide (10) à partir de et vers ladite partie de recouvrement autour d'un axe d'articulation (29).

3. Ensemble selon la revendication 2, **caractérisé en ce que** ledit axe d'articulation (29) est un axe d'articulation fixe.

4. Ensemble selon la revendication 2 ou 3, **caractérisé en ce que** ledit axe d'articulation (29) s'étend le long d'une section d'un bord de périmètre externe de ladite partie rigide (10).

5. Ensemble selon l'une quelconque des revendications précédentes, **caractérisé en ce que** ladite partie rigide (10), ladite partie de recouvrement (25) et ladite partie affaiblie (26) font partie d'une construction d'un seul tenant.

6. Ensemble selon l'une quelconque des revendications précédentes, **caractérisé en ce que**, lorsqu'elle est agencée dans la position de recouvrement, ladite partie de recouvrement (25) s'étend à partir du côté de la partie rigide, faisant face, à l'usage, à l'intérieur d'une zone de coffre relative du véhicule.

7. Ensemble selon l'une quelconque des revendications précédentes, **caractérisé en ce que** ladite partie rigide (10) et ladite partie de recouvrement (25) délimitent mutuellement une chambre de boîtier (31) pour ledit dispositif en tissu rétractable (8) ; ladite chambre communiquant avec l'extérieur par une fente (23) obtenue à travers ladite partie rigide (10) à travers laquelle ledit tissu rétractable (8b) passe.

8. Ensemble selon l'une quelconque des revendications précédentes, **caractérisé en ce qu'**il comprend au moins un dispositif de tissu rétractable (8) supplémentaire supporté par ladite plage arrière (3) ; ledit dispositif en tissu rétractable (8) supplémentaire étant recouvert par ladite partie de recouvrement (25) relative.

9. Ensemble selon la revendication 8, **caractérisé en ce que** lesdits dispositifs en tissu rétractable (8) sont agencés côte à côte et logés dans une chambre commune délimitée par ladite partie rigide (10) et par ladite partie de recouvrement (25).

10. Plage arrière (3) pour véhicule, en particulier, des véhicules à moteur, la plage arrière (3) comprenant une partie rigide (10) et des moyens pour coupler ladite partie rigide à un élément de fixation, et étant **caractérisée en ce qu'**elle comprend également au moins une partie de revêtement de périmètre en forme de drapeau et au moins une partie affaiblie (26) agencée entre ladite partie rigide (10) et ladite partie de recouvrement de périmètre en forme de drapeau pour permettre à la partie de recouvrement de périmètre en forme de drapeau d'être agencée dans une position faisant face à ladite partie rigide (10) ; lorsqu'elle est agencée dans la position faisant face à ladite partie rigide (10), la partie de recouvrement de périmètre en forme de drapeau délimitant avec la partie rigide (10) au moins une chambre de logement (31).

11. Plage arrière selon la revendication 10, **caractérisée en ce que** ladite partie affaiblie (26) définit une articulation virtuelle (28) appropriée pour permettre à la partie de recouvrement de périmètre en forme de drapeau de tourner par rapport à ladite partie rigide (10) autour d'un axe d'articulation (29).

12. Plage arrière selon la revendication 10 ou 11, **caractérisée en ce que** ladite partie rigide (10), ladite partie de recouvrement de périmètre en forme de drapeau et ladite partie affaiblie (26) sont réalisées comme une construction d'un seul tenant.
